Europäisches Patentamt

European Patent Office

Office européen des brevets

(11) Publication number: **0 210 837 B1**

# EUROPEAN PATENT SPECIFICATION

(45) Date of publication of patent specification: **06.10.93**     (51) Int. Cl.5: **B01D 61/02**, A23C 9/142

(21) Application number: **86305659.4**

(22) Date of filing: **23.07.86**

(54) **Reverse osmosis treatment process.**

(30) Priority: **25.07.85 JP 162816/85**

(43) Date of publication of application:
**04.02.87 Bulletin  87/06**

(45) Publication of the grant of the patent:
**06.10.93 Bulletin  93/40**

(84) Designated Contracting States:
**DE FR GB**

(56) References cited:
**EP-A- 0 122 439
GB-A- 2 130 069
US-A- 3 836 457**

**JOURNAL OF DAIRY SCIENCE, vol. 63, no 2,
1980, pp. 204-214, Champaign, Illinois, US; J.
Hiddink et al.: "Reverse osmosis of dairy
liquids"**

**JOURNAL OF DAIRY SCIENCE, vol. 66, no. 12,
1983, pages 2447-2451, Champaign, Illinois,
US; D.M. BARBANO et al.: " Influence of
reverse osmosis on milk lipolysis"**

(73) Proprietor: **RESEARCH AND DEVELOPMENT
ASSOCIATION FOR MEMBRANE APPLICA-
TIONS TO THE FOOD INDUSTRIES
2nd Floor, No. 202 of Honda Building
2-13, Toranomon 3-chome
Minato-ku
Tokyo(JP)**

(72) Inventor: **Okonogi, Shigeo
10-12, Chuo 5-chome
Ohta-ku Tokyo(JP)**
Inventor: **Tomita, Mamoru
47-6
Higashiasahina 1-chome
Kanagawa-ku
Yokohama City Kanagawa Prefecture(JP)**
Inventor: **Fukuwatari, Yasuo
1-4-103
Nijigaoka 3-chome
Aso-ku
Kawasaki City Kanagawa Prefecture(JP)**
Inventor: **Matsumoto, Koichi
5-14
Kamiyoga 1-chome
Setagaya-ku Tokyo(JP)**

EP 0 210 837 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.10/3.6/3.3.1)

THE AUSTRALIAN JOURNAL OF DAIRY TECH-NOLOGY, vol. 33, no. 2, 1978, pages 57-62, Parkville Victoria, AU; B.R. SMITH et al.: "Fouling in reverse osmosis of whey"

C.PERI - W.L.DUNKLEY,Journal of Food Science,Vol.36(1991),p.1-25/1-3a "Reverse Osmosis of cottage cheese whey"

JOURNAL OF DAIRY SCIENCE, vol. 54, no. 3, 1971, pp. 306-311, Champaign, Illinois, US; T.H. Lim et al.: "Role of protein in reverse osmosis of cottage cheese whey"

Inventor: **Tamura, Yoshitaka**
**4-5, Fujizuka 1-chome**
**Kohoku-ku**
**Yokohama City Kanagawa Prefecture(JP)**
Inventor: **Mizota, Teruhiko**
**4-4-101, Seishincho 1-chome**
**Edogawa-ku Tokyo(JP)**
Inventor: **Nakajima, Atsushi**
**40-6, Sunagawacho 2-chome**
**Tachikawa City Tokyo(JP)**
Inventor: **Endo, Haruo**
**123, Saromacho**
**Asanishitomi**
**Tokoro-gun Hokkaido(JP)**
Inventor: **Sato, Norio**
**37-5-308**
**Mukaihara 4-chome**
**Higashiyamato City Tokyo(JP)**
Inventor: **Inagaki, Koji**
**40-6-103, Sunagawacho 2-chome**
**Tachikawa City Tokyo(JP)**

(74) Representative: **Ouest, Barry et al**
**M'CAW & Co.**
**41-51 Royal Exchange**
**Cross Street**
**Manchester M2 7BD (GB)**

## Description

This invention relates to a reverse osmosis treatment process, particularly a stable reverse osmosis treatment process which is prevented from lowering in throughput capacity by carrying out treatment while keeping the permeate flux of a reverse osmosis membrane constant with the lapse of time.

More particularly, the reverse osmosis treatment process of this invention is for concentrating a foodstuff solution in the field of food processing.

FIELD OF INVENTION AND RELATED ART

Reverse osmosis treatment process comprises applying a pressure higher than osmotic pressure to separate a solvent from solutes through a reverse osmosis membrane, thereby concentrating the solutes. In general, with an increase of an applied pressure in the range from 2 to 6 MPa which is within the limit of pressure tightness of the membrane and apparatus, the throughput capacity per unit area of the membrane is increased and the degree of concentration of the solutes can also be increased.

Therefore, when there is used a multistage continuous reverse osmosis apparatus which comprises a plurality of reverse osmosis modules connected in series and is operated so as to increase the concentration of solutes successively according as a solution to be treated goes downstream, the permeate flux can be kept large when the apparatus is operated by applying to all modules their respective maximum allowable pressures. Accordingly, such an operating method has heretofore been considered an efficient method.

PROBLEMS TO BE SOLVED BY THE INVENTION

The present inventors have continued investigation on reverse osmosis treatment of dairy products. When a conventional multistage continuous reverse osmosis apparatus was operated for cheese whey by applying to all modules their respective maximum allowable pressures, the present inventors experienced the lowering in throughput capacity because of decrease in permeat flux of modules in each stage with the lapse of time. Such decrease of permeate flux is observed in treatment of the other foods such as milk, skim milk, fruit juices, soybean milk and the ultrafiltrated permeates thereof. As to skim milk and the ultrafiltra-filtrated permeates of which, there is a report of Hiddink et al., J. Diary Sci, 63, 204 (1980). As to cheese whey, there are experiments of the present inventors, and a report of Lim, T.H., et al., J. Dairy Sci., 54, 306 (1971), and a report of Smith, B.R., Aust. J. Dairy Tech., 33, 57 (1978).

US Patent 3836457 describes multi-stage reverse osmosis apparatus which uses relatively high operating pressures without significantly exceeding the pressure at which irreversible compaction of the membrane occurs.

Journal of Food Science Volume 36 Number 1, 1971, pages 25 - 30 describes experiments carried out on reverse osmosis of cheese whey using various membranes. Low pressures giving a constant permeate flux are described, but higher pressures giving declining fluxes are referred to in relation to practical applications.

In order to overcome such a decrease of the permeate flux, change of the pH of a solution to be treated and/or introduction of a step of frequently washing a treating apparatus are considerable, but these measures are not always sufficient. Further, in the case of a continuous reverse osmosis treatment process, when successive processes are constructed by carrying out thereafter a cooling procedure or another procedure, a change in the throughput capacity of a reverse osmosis apparatus forces the capacity of the subsequent process to be changed concomitantly, which is a serious problem. Occurrence of a decrease of the permeate flux indicates occurrence of adhesion of solutes onto membrane surfaces and fouling thereon, and in processing foods, it is also a serious problem that frequent washing of the apparatus is necessary.

An object of this invention is to provide a novel reverse osmosis treatment process which can solve these problems.

MEANS FOR SOLVING THE PROBLEMS

According to the experiments of the present inventors, when the average operating pressure is increased, there is a limit of average operating pressure (a limiting pressure) above which the permeate flux is decreased with continuance of operation, and hence reverse osmosis treatment is carried out at an average operating pressure lower than the limiting pressure.

According to one aspect of the invention therefore there is provided a reverse osmosis treatment process for concentrating a foodstuff solution in a plurality of modules of reverse osmosis apparatus including osmotic membranes by applying an operating pressure to said solution in said modules, wherein each module has a circulating loop connecting a feed port and an exhaust port for solution to be treated to each other to form a single-stage treating system, said circulating loops of the individual stages being connected in series to form a multistage treating system, and an inlet for feed of solution and an outlet for discharge of solution of said reverse osmosis apparatus formed in the circulating loops of the first stage and the last stage respectively, characterised in that the average operating pressure applied is below and near to a limiting pressure at which the permeate flux of the solution remains constant with time, and the average operating pressures in the individual stages are successively increased according as the stage numbers become increased.

For increasing the average operating pressures in the individual stages, it is preferable to provide pressure-increasing pumps in and/or between the circulating loops of the individual modules and increase the average operating pressures in the individual stages by operating these pressure-increasing pumps.

According to a second aspect there is provided a reverse osmosis treatment process for concentrating a foodstuff solution in a plurality of modules of reverse osmosis apparatus including osmotic membranes by applying an operating pressure to said solution in said modules, wherein each module has a circulating loop connecting a feed port and an exhaust port for solution to be treated to each other to form a single-stage treating system, said circulating loops of the individual stages being connected in series to form a multistage treating system, and an inlet for feed of solution and an outlet for discharge of solution of said reverse osmosis apparatus formed in the circulating loops of the first stage and the last stage respectively, and wherein the average operating pressures in the individual stages are maintained so as to be substantially the same, characterised in that the average operating pressure applied is below and near to a limiting pressure at which the permeate flux of the solution remains constant with time, and the tightness of porosities of said reverse osmosis membranes being successively decreased according as the stage numbers become increased.

According to a third aspect there is provided a reverse osmosis treatment process for concentrating a foodstuff solution in a plurality of modules of reverse osmosis apparatus including osmotic membranes by applying an operating pressure to said solution in said modules, wherein each module has a circulating loop connecting a feed port and an exhaust port for solution to be treated to each other to form a single-stage treating system, said circulating loops of the individual stages being connected in series to form a multistage treating system, and an inlet for feed of solution and an outlet for discharge of solution of said reverse osmosis apparatus formed in the circulating loops of the first stage and the last stage respectively, characterised in that the average operating pressure applied is below and near to a limiting pressure at which the permeate flux of the solution remains constant with time, the average operating pressures in the individual stages are successively increased accordingly as the stage numbers become increased, and the tightness of porosities of said reverse osmosis membranes are successively decreased according as the stage numbers become increased.

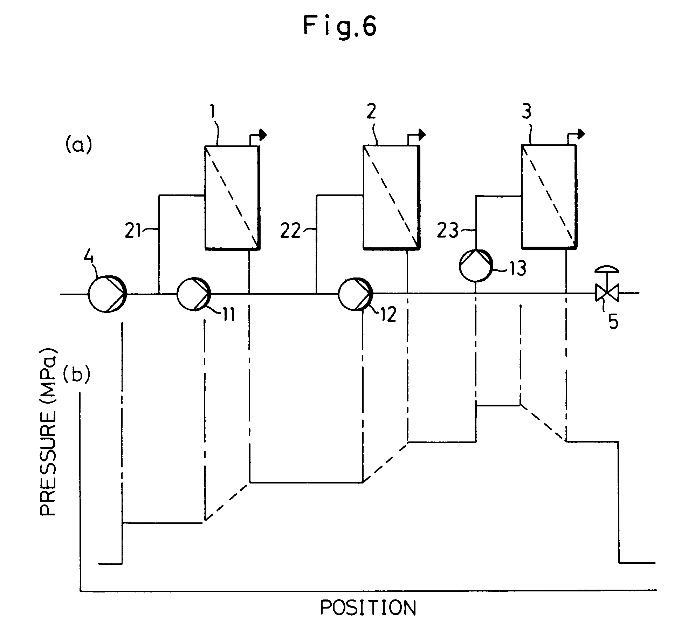

Fig. 6(a) shows one example of the above mentioned circulating-loop reverse osmosis apparatus. Numeral 1 shows a module of the first stage, numeral 2 a module of the second stage, numeral 3 a module of the third stage, numeral 4 a feed pump for a solution to be treated, numeral 5 a pressure control valve, numeral 21 a circulating loop of the module 1 of the first stage, numeral 22 a circulating loop of the module 2 of the second stage, numeral 23 a circulating loop of the module 3 of the third stage, numeral 11 a circulating pump of the circulating loop 21, numeral 12 a circulating pump of the circulating loop 22, and numeral 13 a circulating pump of the circulating loop 23.

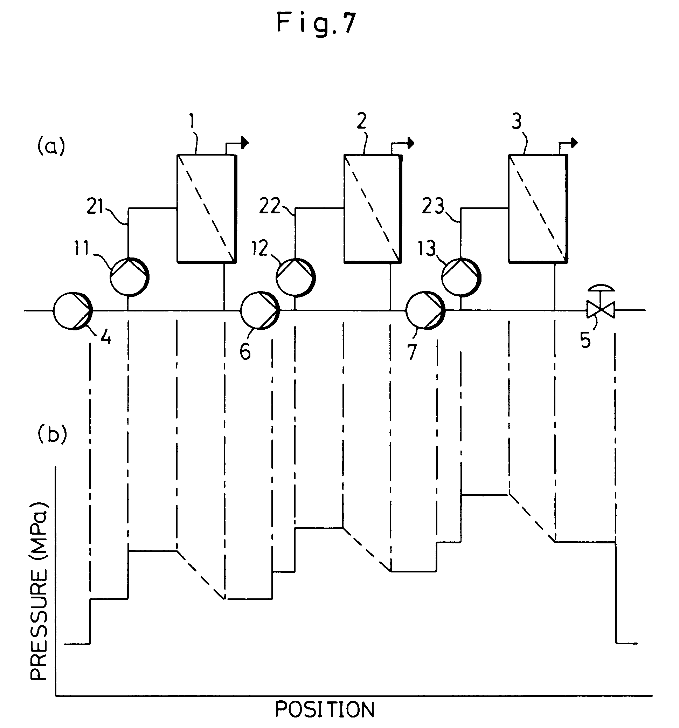

Fig. 7 (a) shows one example of apparatus constructed by providing pressure-increasing pumps between the circulating loops in the above-mentioned circulating-loop reverse osmosis apparatus. Numeral 6 shows a pressure-increasing pump of the circulating loop 22 of the module 2 of the second stage, and numeral 7 a pressure-increasing pump of the circulating loop 23 of the module 3 of the third stage. The other numerals in the drawing show corresponding parts in above Fig. 6.

Fig. 6 (b) is a graph showing the change of pressure and the distribution thereof in the above-mentioned circulating-loop reverse osmosis apparatus of Fig. 6 (a), and Fig. 7 (b) is a graph showing the change of pressure and the distribution thereof in the circulating-loop reverse osmosis apparatus having pressure-increasing pumps of Fig. 7 (a).

It is also possible to further combine back pressure regulating valves with these pressure-increasing pumps and/or circulating pumps properly; to increase he average operating pressures successively according as the stage number become increased, and to adjust the average operating pressures at a desired pressure which is below and near the limiting pressure.

## BRIEF DESCRIPTION OF THE DRAWINGS

Fig. 1 (a) is a flow sheet of a conventional three-stage continuous reverse osmosis apparatus. Fig. 1 (b) is a graph showing the pressure distribution in the apparatus shown in Fig. 1 (a). Fig. 2 is a graph showing the change with the lapse of time of the permeate flux in Experiment 1. Fig. 3 is a graph showing the change with the lapse of time of the permeate flux in Experiment 2. Fig. 4 is a graph showing the change with the lapse of time of the permeate flux in Experiment 3. Fig. 5 is a graph showing the change with the lapse of time of the permeate flux in Experiment 4. Fig. 6 (a) is a flow sheet of one example of reverse osmosis treatment apparatus used in this invention. Fig. 6 (b) is a graph showing the pressure distribution in the apparatus shown in Fig. 6 (a). Fig. 7 (a) is a flow sheet of another example of reverse osmosis treatment apparatus used in this invention. Fig. 7 (b) is a graph showing the pressure distribution in the apparatus shown in Fig. 7 (a).

## EXPERIMENTS AND EXAMPLES

This invention is further illustrated below in detail by way of Experiments and Examples.

Experiment 1

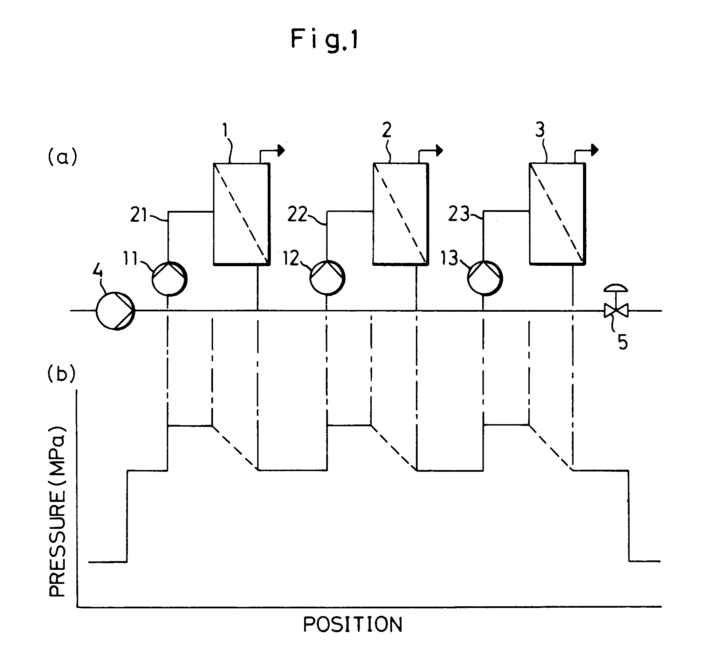

This is an experiment using a conventional method which comprises operating the three-stage continuous reverse osmosis apparatus shown in Fig. 1 (a) by applying a maximum, allowable pressure.

In Fig. 1 (a), numeral 1 shows a module of the first stage, numeral 2 a module of the second stage, numeral 3 a module of the third stage, numeral 11 a circulating pump of the first stage, numeral 12 a circulating pump of the second stage, numeral 13 a circulating pump of the third stage, numeral 21 a circulating loop of the first stage, numeral 22 a circulating loop of the second stage, numeral 23 a circulating loop of the third stage, numeral 4 a feed pump for a solution to be treated, and numeral 5 a pressure control valve.

By using cheese whey [fat 0.05% (by weight, hereinafter the same applied), protein 0.8%, lactose 4.65%, ash 0.5%, water 94%, pH 6.4] as a solution to be treated, reverse osmosis concentration was conducted in the three-stage continuous reverse osmosis apparatus shown in Fig. 1 (a) under the following treatment conditions.

Treatment conditions:

Number of modules: 3
Type of modules:
Intermediate branching type Arlamo-26, mfd. by Alfa Laval Co., Ltd.
Effective membrane area: 7.92 m$^2$ (per module)
Reverse osmosis membrane:
FL-190 (a trade name, mfd. by Teijin Engineering Co., Ltd.)
Temperature of the solution to be treated: About 40°C
Average operating pressure in each module: 3.9 MPa
Degree of concentration: 3-fold
The degree of concentration was adjusted by adjusting the feed pump for solution to be treated 4 and the pressure control valve 5 so as to adjust the amount of a product solution (the amount of a concentrate) to about one-third of the amount of the solution to be treated fed by the feed pump for solution to be treated 4. Each of the circulating pumps 11, 12 and 13 had a capacity of a circulation rate in module of about 900 liters/hr. The pressure loss in module was 0.4 MPa. Since the modules were of intermediate branching type, the net discharge rate was about 1,800 liters/hr which was about twice the circulation rate.

Fig. 1 (b) show a distribution of pressure in a flow path running through the modules 1, 2 and 3 in Fig. 1 (a), referring to Fig. 1 (a) by means of the alternate long and short dash line. The operating pressures in the modules are shown by the dotted line.

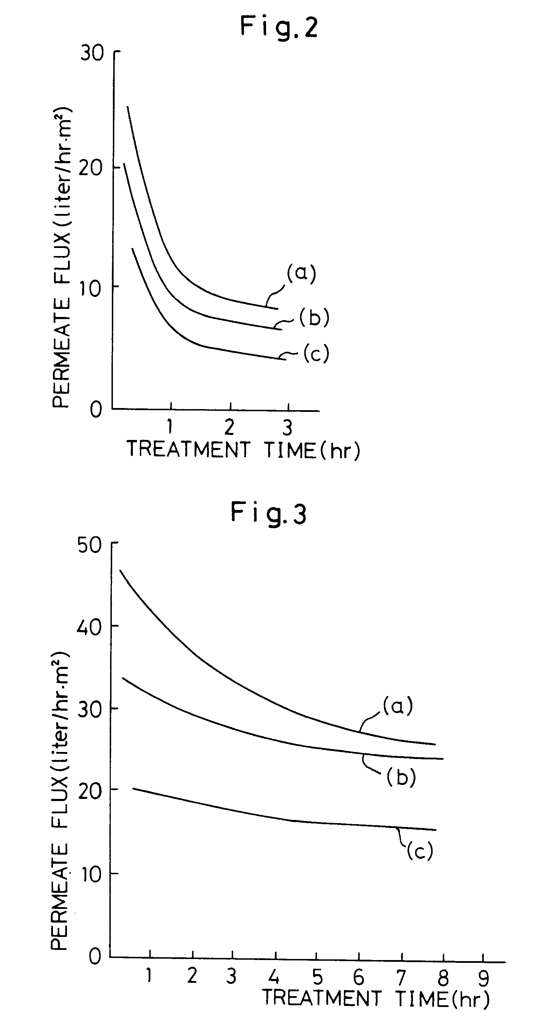

As a result of the above-mentioned reverse osmosis treatment, the permeate fluxes of module in the individual stages showed the changes with the lapse of time shown in Fig. 2. In Fig. 2, (a) shows a change with the lapse of time in the permeate flux of module in the first stage, (b) a change with the lapse of time in the permeate flux of module in the second stage, and (c) a change with the lapse of time in the permeate flux of module in the third stage.

As a final product solution, a 3-fold concentrated solution having a solids content of about 18% could be obtained, but the permeate fluxes in the individual stages were greatly decreased, so that though the throughput capacity was 500 liters/hr 30 minutes after the beginning of operation, it is lowered to about 220 liters/hr 3 hours after the beginning of operation. From this, it can be seen that in this operation, an stable run cannot be maintained in industrial operation with respect to throughput capacity.

Experiment 2

Reverse osmosis treatment was carried out in the same manner as in Experiment 1, except change of the pH of the cheese whey in experiment 1 to 5.8.

The changes with the lapse of time in the permeate fluxes of module in the individual stages as a result of this experiment are shown in Fig. 3. In Fig. 3, (a), (b) and (c) show the corresponding items in Experiment 1.

From the results, it can be seen that though the degree of decrease of the permeate fluxes is reduced by the change of pH of the solution to be treated, the throughput capacity cannot be stably maintained.

From Experiments 1 and 2, it was found that increasing the throughput capacity by increasing the operating pressure as much as possible was disadvantageous in maintenance of stable operation. Therefore, the present inventors changed the operating pressure variously, investigated its relations with the degree of concentration, the permeate fluxes and the like, and looked for a clue for solving the problems.

Experiment 3

Reverse osmosis treatment was carried out in the same manner as in Experiment 1, except that as cheese whey as a solution to be treated, there was used cheese whey having a pH of 6.3 and a solids content of 12% (fat 0.1%, protein 1.6%, lactose 9.3%, and ash 1.0%), that the number of modules of a reverse osmosis apparatus was 1 (one-stage treatment), that the treatment temperature was adjusted to about 35°C, and that the average operating pressure was set at 1.8 MPa for about 28 minutes after the beginning of operation, and then at 3.9 PMa for 16 minutes.

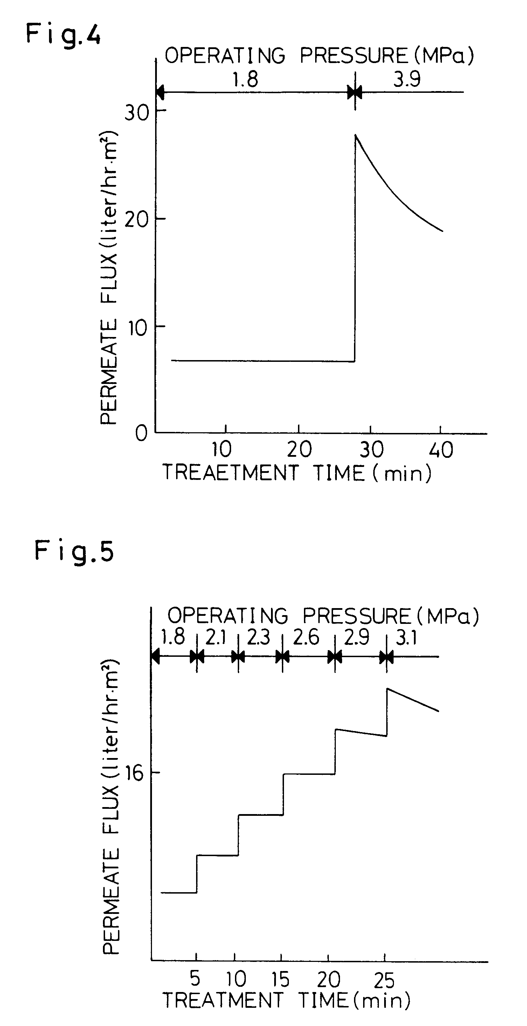

The change of the permeate flux with the lapse of time in this experiment is shown in Fig. 4.

According to Fig. 4, there was no decrease of the permeate flux at all at a low operating pressure of 1.8 MPa, while at a high pressure of 3.9 MPa, the permeate flux was decreased rapidly with the lapse of time. From this, it can be seen that when the average operating pressure is low, the permeate flux can be kept constant though at a low level.

Experiment 4

Reverse osmosis treatment was carried out in the same manner as in Experiment 3, except that the change of operating pressure in Experiment 3 was replaced by setting operation pressures at more fixed points than that of Experiment 3 and increasing operating pressure from 1.8 MPa to 3.1 MPa as shown in Fig. 5.

In this experiment, there can be investigated the relationship between average operating pressure and maximum permeate flux which can be kept constant, namely, which is not lowered.

The results are as shown in Fig. 5.

From Fig. 5, it can be seen that when the operating pressure is 2.6 MPa, there can be attained a maximum permeate flux of 16.4 liters/hr which is not lowered with the lapse of time, and that at an operating pressure of 2.6 MPa or below, the permeate flux can be kept constant. That is to say, it can be seen that the operating pressure for keeping the permeate flux constant with the lapse of time has an upper limit (a limiting pressure), and that when the operating pressure is equal to or lower than the upper limiting pressure, it can be possible to keep the permeat flux constant with the lapse of time, namely, to keep the throughput capacity constant. Further, it can be seen that when the operating pressure is set below and near the limiting pressure, it is possible to keep the permeate flux at a high constant value with the lapse of time, namely, to keep the permeate flux at a value at which the throughput capacity is high.

Experiment 5

In the present experiment, there was investigated how the limiting pressure and the maximum constant permeate flux changes with a change of the degree of concentration of a solution to be treated.

Reverse osmosis treatment was carried out in the same manner as in Experiment 1, except that in place of the three-stage continuous treatment, there was employed a process which comprises once holding the solution subjected to continuous treatment in the first stage in a tank (not shown in the drawings) outside the system, subjecting the solution to continuous treatment in the second stage, holding the solution in another tank (not shown in the drawings) outside the system, and finally subjecting the solution to continuous treatment in the third stage to obtain a final concentrated solution. There were determined the limiting pressures and the maximum constant permeate fluxes (the maximums of the permeate fluxes which did not decrease with the lapse of time) in the individual stages.

Further, the same reverse osmosis treatment as described above was carried out, except that the cheese whey in Experiment 2 was used as a solution to be treated.

The results were as shown in Table 1.

### Table 1

### Change of limiting pressure and maximum contant permeate flux with change of degree of concentration

| | Stage | First stage | Second stage | Third stage |
|---|---|---|---|---|
| Solution to be treated | Solid content of the result-ing cheese whey (%) | About 8 | About 13 | About 18 |
| Cheese whey of Example 1 | Maximum constant permeate flux ($\ell$/hr.m$^2$) | 8.1 | 6.2 | 3.7 |
| | Average operat-ing pressure (MPa) | 1.24 | 1.64 | 2.05 |
| Cheese whey of Example 2 | Maximum constant permeate flux ($\ell$/hr.m$^2$) | 25.5 | 23.9 | 15.2 |
| | Average operat-ing pressure (MPa) | 2.18 | 2.93 | 3.29 |

From Table 1, it can be seen that when the treatment is carried out by using the same reverse osmosis membrane, an increase of the concentration of each solution to be treated results in a decrease of the maximum constant permeate flux and an increase of the limiting pressure. Therefore, it can be seen that in the case of a continuous reverse osmosis apparatus comprising modules and their respective ciculating loops connected in series, namely, comprising stages connected in series, it is necessary for attainment of a maximum constant permeate flux in each stage to increase the operating pressures in the individual stages successively according as the stage numbers become increased. Accordingly, apparatuses of conventional type having the arrangements of pumps shown in Fig. 1 (a) cannot be used because the average operating pressures in the individual stages of these apparatuses are constant as shown in Fig. 1 (b).

From the results of Experiments 1 to 5, the following becomes apparent.

7

(1) It is known that in reverse osmosis treatment of foods such as whey, milk, skim milk, fruit juices, soybean milk and the ultrafiltrated permeates thereof, the permeate flux decreases with the lapse of time under a conventional operating pressure, but when the average operating pressure is set equal to or below a certain value, the permeate flux does not decrease. That is to say, an upper limiting pressure is present and is an operating pressure at which the permeate flux can be kept constant.

(2) At the pressure equal to or below the limiting pressure in above (1), the constant permeate flux (a permeate flux which does not decrease with the lapse of time) also increases with an increase of the average operating pressure, so that a maximum constant permeate flux can be attained at the limiting pressure.

(3) The maximum constant permeate flux depends on physical properties of a solution to be treated, and with an increase of the degree of concentration of the solution to be treated, the maximum constant permeate flux decreases but the limiting pressure increases.

Experiment 6

All the reverse osmosis membranes in the reverse osmosis apparatus used in Experiments 1 to 5 were similar in kind and had the same looseness of porosity. In the present experiment, the relationship among kind (the looseness of porosity) of reverse osmosis membrane, maximum constant permeate flow, and limiting pressure was examined.

Reverse osmosis treatment was carried out in the same manner as in Experiment 4, except for use of a reverse osmosis membranes FL-198 and FL-170 (trade names, both mfd. by Teijin Engineering Co., Ltd.), the former having a higher tightness porosity than the reverse osmosis membrane FL-190 used in Experiment 4, and the latter having a lower tightness of porosity than FL-190.

As a result, when the reverse osmosis membrane FL-198 was used, the limiting pressure was 3.23 MPa and the maximum constant permeate flow was 16.4 liters/hr•m$^2$. When the reverse osmosis membrane FL-170 was used, the limiting pressure was 2.33 MPa and the maximum constant permeate flow was 16.4 liters/hr•m$^2$.

From these results, it can be seen that the tightness of limiting pressure increases with an increase of the porosity of reverse osmosis membrane and decreases with a decrease of the tightness of porosity, but that the maximum constant permeate flux is constant regardless of the tightness of porosity of reverse osmosis membrane.

Experiment 7

Based on the finding in Experiment 6, there was carried out experiments which confirmed that the limiting pressure can be kept substantially constant by decreasing the tightness of porosity of reverse osmosis membrane.

Reverse osmosis treatment was carried out in the same manner as in Experiment 5, except that FL-198 being tight membrane was used as a reverse osmosis membrane in the first stage and FL-170 being loose membrane as a reverse osmosis membrane in the third stage, and that the operating pressures in the individual stages were adjusted so as to be close to the operating pressures in the second stage in Experiment 5.

The results were as shown in Table 2.

## Table 2

### Change of limiting pressure and maximum constant permeate flux with change of the tightness porosity of reverse osmosis membrane

| | Stage | First stage | Second stage | Third stage |
|---|---|---|---|---|
| Solution to be treated | Solid content of the result-ing cheese whey (%) | About 8 | About 13 | About 18 |
| Cheese whey of Example 1 | Maximum const-ant premeate flux ($\ell$/hr·m$^2$) | 8.18 | 6.2 | 3.75 |
| | Average operat-ing pressure (MPa) | 1.56 | 1.64 | 1.64 |
| | Reverse osmosis membrane type | FL-198 | FL-190 | FL-170 |
| Cheese whey of Example 2 | Maximum const-ant permeate flux ($\ell$/hr·m$^2$) | 25.5 | 23.9 | 15.2 |
| | Average operat-ing pressure (MPa) | 2.93 | 2.93 | 2.95 |
| | Reverse osmosis membrane type | FL-198 | FL-190 | FL-170 |

When the results shown in Table 2 are compared with the results shown in Table 1 in Experiment 5, it can be seen that the maximum constant permeate fluxes were substantially the same, and that the average operating pressures of the first stage was uppered and that of the third stage was lowered.

Thus, in order to make the permeate fluxes of individual modules maximum and constant and maintain the throughput capacity stably in continuous reverse osmosis treatment, it is advisable that there is used a reverse osmosis apparatus comprising a plurality of modules, each of said modules being equipped with a circulating loop connecting a feed port and an exhaust port for solution to be treated to each other to form a single-stage treating system, said circulating loops of the individual stages being connected in series to form a multistage treating system, and a for feed of solution inlet and an outlet for discharge of solution of said reverse osmosis apparatus formed in the circulating loops of the first stage and the last stage, respectively, in which the tightness of porosity of reverse osmosis membranes fitted to the individual stages are successively decreased according as the stage numbers become increased, and that the limiting pressures at the individual stages are set so as to be substantially the same by maintaining the average operating pressures in the individual stages so as to be substantially the same, namely, changing the kinds

9

of reverse osmosis membranes of the individual stages so that their tightness of porosities are successively decreased according as the stage numbers become increased.

As a reverse osmosis apparatus in this case, an conventional-type one shown in Fig. 1 (a) can also be used.

According to the results of Experiments described above, as a continuous reverse osmosis treatment process which aims at stable maintenance of the throughput capacity at average operating pressures equal to or below the limiting pressure, there are a process in which the operating pressures are successively increased according as the stage numbers become increased, and a process in which the tightness of porosities of reverse osmosis membranes are successively decreased according as the stage numbers become increased. There can also be employed a process comprising the combination of these processes, namely, a process in which the tightness of porosities of reverse osmosis membranes are successively decreased according as the stage numbers become increased, and the operating pressures are successively increased according as the stage numbers become increased.

Examples of performance of this invention are explained below, but this invention is not limited to these examples.

Example 1 (comparative: one module only)

As a treating apparatus, a continuous reverse osmosis apparatus for a single-stage treatment was used in place of the three-stage continuous reverse osmosis apparatus shown in the flow sheet of Fig. 1 (a). The module used was Arlamo-26 (a trade name, mfd. by Alpha Laval Co., Ltd.), which was fitted a reverse osmosis membrane FL-190 (a trade name, mfd. buy Teijin Engineering Co., Ltd., PBIL type having a salt rejection percentage of about 90%). The effective surface area of each module was 7.92 $m^2$.

An experiment in which average operating pressure was successively increased was previously conducted in the same manner as in Experiment 4 to confirm that the limiting pressure was 3.09 MPa.

Cheese whey (fat 0.05%, protein 0.8%, lactose 4.65%, ash 0.5%, water 94%, pH 6.4) was used as a solution to be treated, the temperature in the module was adjusted to 10°C, the solution to be treated was fed at a rate of 129 liters/hr by means of a feed pump 4 for solution to be treated, the average circulation rate in the module was adjusted to about 900 liters/hr by means of a circulating pump 11, and operation was conducted while adjusting the average operating pressure to 1.5 MPa by operating a pressure control valve 5.

In this treatment procedure, the water permeate flux reached a steady value of 5.7 liters/hr•$m^2$ 30 minutes after the beginning of operation and was constant without any change even after 2 hours and 34 minutes. During this period of time, whey concentrated to a total solids content of 9% could be stably obtained at a capacity of 84 liters/hr.

Example 2 (comparative: one module only)

By use of the same apparatus and solution to be treated as in Example 1, operation was conducted in the same manner as in Example 1, except that the rate of feed by means of the feed pump 4 for solution to be treated was adjusted to 378 liters/hr and that the average operating pressure was adjusted to 2.9 MPa by operating the pressure control valve 5.

A steady state was reached about 30 minutes after the beginning of operation, and the operation was continued for another 2 hours and 38 minutes. The water permeate flux was 16.5 liters/hr•$m^2$ 30 minutes after the beginning of operation and 16.4 liters/hr•$m^2$ even after 2 hours and 38 minutes, and during this period, whey concentrated to a total solids content of 9% could be stably obtained at a capacity of 248 liters/hr.

Example 3

There was used a reverse osmosis apparatus comprising three same single-stage apparatuses as used in Example 1 which were arranged in series, and tanks for balance placed between them. The same solution to be treated as in Example 1 was used, and the same module and average circulation rate in module as in Example 1 were also employed, but the operation temperature was adjusted to 40°C.

The average solids content in module after concentration in the first, second and third stages were predetermined to be about 8.5%, about 12.5% and about 18%, respectively, and experiments in which the average operating pressure was successively increased were previously carried out for wheys having each of these solids concentrations in the same manner as in Experiments 4 to confirm that the limiting pressures in the first, second and third stages were 1.24 MPa, 1.64 MPa and 2.05 MPa, respectively.

Whey having a solids content of 6% was fed to the reverse osmosis apparatus of the first stage at a rate of 205 liters/hr by means of a feed pump 4 for solution to be treated and circulated through a module by means of a circulating pump, and operation was conducted while adjusting the average operating pressure to 1.24 MPa by operating a control valve at the outlet of the first stage. A steady state was reached 30 minutes after the beginning of operation, and whey concentrated to a total solids content of 8.56% could be obtained at a stable capacity of 141 liters/hr for 2 hours. During this period of time, the water permeate flux was maintained at 8.08 liters/hr•m$^2$.

The concentrate obtained was once received in a balance tank, and this whey was fed to the next reverse osmosis apparatus of the second stage at a rate of 141 liters/hr in the same manner as with the feed to the first stage and circulated through a module by means of a circulating pump. The average operating pressure was adjusted to 1.64 MPa in the same manner as in the first stage. A steady state was reached 30 minutes after the beginning of operation, and whey concentrated to a total solids content of 12.75% could be obtained at a stable capacity of 92 liters/hr for 2 hours. During this period of time, the water permeate flux was maintained at 6.19 liters/hr•m$^2$.

The concentrate obtained was once received in a balance tank, and this whey was fed to the next reverse osmosis apparatus of the third stage at a rate of 92 liters/hr in the same manner with the feed to the second stage and circulated through a module by means of a circulating pump. The average operating pressure was adjusted to 2.04 MPa in the same manner as in the first stage. A steady state was reached about 30 minutes after the beginning of operation and whey concentrated to a total solids content of 17.95% could be obtained at a stable capacity of 63 liters/hr for 2 hours. During this period of time, the water permeate flux was maintained at 3.66 liters/hr•m$^2$.

Example 4

The three-stage continuous reverse osmosis apparatus shown in Fig. 6 (a) was used. There were used the same modules, reverse osmosis membranes, and solution to be treated as in Example 1, and the average circulation rate in modules was adjusted to 900 liters/hr.

The average solids contents in modules in the first, second and third stages in the case of 3-fold concentration were predetermined to be about 8.5%, about 12.5% and about 18%, respectively, and the experiments in which the average operating pressure was successively increased were previously carried out for wheys having each of these solids concentrations in the same manner as in Example 4 to confirm that the limiting pressures in the first, second and third stages in the case of operation at 40°C were 1.24 MPa, 1.64 MPa and 2.05 MPa.

Cheese whey was fed at a temperature of 40°C at a flow rate of 205 liters/hr by means of a feed pump 4 for solution to be treated and circulated through the modules by means of circulating pumps 11, 12 and 13, respectively, and operation was conducted while adjusting the average operating pressures in the first, second and third stages to 1.24 MPa, 1.64 MPa and 2.04 MPa, respectively, by means of a pressure control valve 5 and control valves (not shown in the drawuings) after the respective modules, and adjusting the temperatures in the modules to about 40°C. A steady state was reached 60 minutes after the beginning of operation, and the water permeate fluxes in the individual stage were 8.08 liters/hr•m$^2$, 6.19 liters/hr•m$^2$ and 3.66 liters/hr•m$^2$ in the first, second and third stages, respectively, and did not change for 7 hours after the beginning of operation. Whey concentrated to a total solids content of 18% could be stably obatained at a capacity of 63 liters/hr.

Example 5

The three-stage continuous reverse osmosis apparatus shown in Fig. 7 (a) was used. The modules and the reverse osmosis membranes used were the same as in Example 4, but pressure-increasing pumps 6 and 7 were placed between the circulating loop of the first stage and the circulating loop of the second stage and between the circulating loop of the second stage and the circulating loop of the third stage, respectively.

As a solution to be treated, there was used the same cheese whey as in Example 1, except that its pH was adjusted to pH 5.8 by dissolution of carbon dioxide. The cheese whey was intended to be concentrated 3-fold at 40°C, and the average solids contents in the individual modules in the first, second and third stages in this case were predetermined to be 7.7%, 11.6% and 17.4%, respectively. Experiments in which the operating pressure was successively increased were previously carried out for wheys having each of these solids concentrations in the same manner as in Example 4 to confirm that the limiting pressures in the first, second and third stages in the case of operation at 40 °C were 2.18 MPa, 2.93 MPa and 3.29 MPa, respectively.

Cheese whey as a solution to be treated was fed at 736 liters/hr by means of a feed pump 4 for solution to be treated and circulated through the modules by means of circulating pumps 11, 12 and 13, respectively. Operation was conducted while adjusting the average operating pressures in the first, second and third stages to 2.16 MPa, 2.91 MPa and 3.27 MPa, respectively, by operating a pressure control valve 5 and control valves (not shown in the drawings) after the respective modules and by operating the pressure-increasing pumps 6 and 7, and while adjusting the temperature to 40 °C. A steady state was reached 30 minutes after the beginning of operation, and the water permeate fluxes in the individual stages were 25.1 liters/hr•m$^2$, 23.7 liters/hr•m$^2$ and 14.9 liters/hr•m$^2$ in the first, second and third stages, respectively, and did not change 7 hours after the beginning of operation. Concentrated whey having a total solids content of 18% could be stably obtained at a capacity of 232 liters/hr.

Example 6

The three-stage continuous reverse osmosis apparatus shown in Fig. 1 (a) was used. The same module as in Example 1 was used, but as reverse osmosis membranes, FL-198, FL-190 and FL-170 (individually trade names, mfd. by Teijin Engineering Co., Ltd.) were used in the first, second and third stages, respectively. These reverse osmosis membranes decrease in the tightness of porosity in that order, but each of them had an effective membrane area of 7.92 m$^2$.

The same cheese whey as in Example 5 was used as a solution to be treated, and was intended to be concentrated 3-fold as in Example 5, and the average solids contents in the individual modules in the first, second and third stages in this case were predetermined to be 7.7%, 11.6% and 17.4%, respectively.

Experiments in which the operating pressure was successively increased were previously carried out for wheys having each of these solids concentrations in the same manner as in Example 4 to confirm that the limiting pressures in the first, second and third stages in the case of operation at 40 °C were 2.93 MPa, 2.93 MPa and 2.95 MPa, respectively.

The cheese whey as a solution to be treated was fed at a temperature of 40 °C at a flow rate of 720 liters/hr by means of a feed pump 4 for solution to be treated, and circulated through the modules at a circulation rate of about 900 liters/hr by means of circulating pumps 11, 12 and 13, respectively. Operation was conducted while adjusting the average operating pressures of all the modules to 2.9 MPa by operating a pressure control valve 5 and control valves (not shown in the drawings) after the respective modules, and adjusting the temperature to 40 °C. A steady state was reached about 30 minutes after the beginning of operation, and the water permeate fluxes in the individual stages were 25.0 liters/hr•m$^2$, 23.4 liters/hr•m$^2$ and 14.5 liters/hr•m$^2$ in the first, second and third stages, respectively, and did not change for 7 hours after the beginning of operation. Concentrated whey having a total solids content of 18% could be stably obtained at a capacity of 222 liters/hr.

Example 7

The three-stage continuous reverse osmosis apparatus shown in Fig. 7 (a) was used. There was employed a flow mode different from that employed in Example 6, but the module used and the membranes used were the same as in Example 6.

The same cheese whey as in Example 1 was used as a solution to be treated, and was intended to be concentrated 3-fold at 40 °C, and the average solids contents in module in the individual stages in this case were predetermined to be 8.5%, 12.5% and 18% in the first, second and third stages, respectively. Experiments in which the operating pressure was successively increased were previously carried out for wheys having each of these solids concentrations in the same manner as in Example 4 to confirm that the limiting pressures in the first, second and third stages in the case of operation at 40 °C were 1.56 MPa, 1.64 MPa and 1.64 MPa, respectively.

Cheese whey as a solution to be treated was fed at a temperature of 40 °C at a flow rate of 195 liters/hr by means of a feed pump 4 for solution to be treated, and circulated through the modules at a circulation rate of 900 liters/hr by means of circulating pumps 11, 12 and 13, respectively. Operation was carried out while adjusting the average operating pressure of the module in the first stage to 1.54 MPa by adjustment of a pressure control valve 5 and control valves (not shown in the drawings) after the respective modules, adjusting the average operating pressure of module in the second stage to 1.58 MPa by further operation of a pressure-increasing pump 6, adjusting the average operating pressure of module in the third stage to 1.62 MPa by still further operation of a pressure-increasing pump 7, and adjusting the temperatures in all the modules to 40°C. A steady state was reched about 60 minutes after the beginning of operation, and the water permeate fluxes in the individual stages were 7.78 liters/hr•m$^2$, 5.65 leters/hr•m$^2$ and 3.66 liters/hr•m$^2$ in the first, second and third stages, respectively, and did not change for 5 hours after the beginning of operation. During this period of time, concentrated whey having a total solids content of about 18% could be stably obtained at a capacity of 60 liters/hr.

EFFECTS OF THE INVENTION

Since the reverse osmosis treatment process of this invention makes it possible to carry out treatment while keeping the permeate flux of a reverse osmosis membrane constant with the lapse of time, it can keep the throughput capacity constant, can prevent adhesion and pollution onto membrane surfaces and fouling thereon, and moreover can maintain stable operation in continuous run.

**Claims**

1.  A reverse osmosis treatment process for concentrating a foodstuff solution in a plurality of modules of reverse osmosis apparatus including osmotic membranes by applying an operating pressure to said solution in said modules,
    wherein each module (1,2,3) has a circulating loop (21, 22, 23) connecting a feed port (4) and an exhaust port (5) for solution to be treated to each other to form a single-stage treating system, said circulating loops of the individual stages being connected in series to form a multistage treating system, and an inlet for feed of solution and an outlet for discharge of solution of said reverse osmosis apparatus formed in the circulating loops of the first stage and the last stage respectively,
    characterised in that the average operating pressure applied is below and near to a limiting pressure at which the permeate flux of the solution remains constant with time, and
    the average operating pressures in the individual stages are successively increased according as the stage numbers become increased.

2.  A reverse osmosis treatment process according to claim 1, wherein the average operating pressures adjusted in the individual modules are increased by means of pressure-increasing pumps provided in and/or between the circulating loops of the individual modules.

3.  A reverse osmosis treatment process for concentrating a foodstuff solution in a plurality of modules of reverse osmosis apparatus including osmotic membranes by applying an operating pressure to said solution in said modules,
    wherein each module (1,2 3,) has a circulating loop (21, 22, 23) connecting a feed port (4) and an exhaust port (5) for solution to be treated to each other to form a single-stage treating system, said circulating loops of the individual stages being connected in series to form a multistage treating system, and an inlet for feed of solution and an outlet for discharge of solution of said reverse osmosis apparatus formed in the circulating loops of the first stage and the last stage respectively, and
    wherein the average operating pressures in the individual stages are maintained so as to be substantially the same, characterised in that the average operating pressure applied is below and near to a limiting pressure at which the permeate flux of the solution remains constant with time, and the tightness of porosities of said reverse osmosis membranes is successively decreased according as the stage numbers become increased.

4.  A reverse osmosis treatment process for concentrating a foodstuff solution in a plurality of modules of reverse osmosis apparatus including osmotic membranes by applying an operating pressure to said solution in said modules,
    wherein each module (1,2,3) has a circulating loop (21, 22, 23) connecting a feed port (4) and an exhaust port (5) for solution to be treated to each other to form a single-stage treating system, said circulating loops of the individual stages being connected in series to form a multistage treating system, and an inlet for feed of solution and an outlet for discharge of solution of said reverse osmosis apparatus formed in the circulating loops of the first stage and the last stage respectively,
    characterised in that the average operating pressure applied is below and near to a limiting pressure at which the permeate flux of the solution remains constant with time, the average operating pressures in the individual stages are successively increased according as the stage numbers become increased, and the tightness of porosities of said reverse osmosis membranes are successively

13

decreased according as the stage numbers become increased.

5. A reverse osmosis treatment process according to any one of claims 1 to 4, wherein the solution to be treated is selected from the group consisting of milk, skim milk, cheese whey, soybean milk and fruit juices.

6. A reverse osmosis treatment process according to any one of claims 1 to 4, wherein the solution to be treated is selected from the group consisting of ultrafiltrated milk, ultrafiltrated skim milk, ultrafiltrated cheese whey, ultrafiltrated soybean milk and ultrafiltrated fruit juices.

**Patentansprüche**

1. Verfahren zur Anwendung von umgekehrter Osmose zwecks Konzentrierung einer Nahrungsmittel-Lösung in mehreren Modulen einer Umkehrosmose-Apparatur mit osmotischen Membranen durch Beaufschlagung der Lösung in den Modulen mit Arbeitsdruck,
bei dem jedes Modul (1, 2, 3) eine Kreislauf-Schleife (21, 22, 23) hat, die ein Einlaßventil (4) mit einem Auslaßventil (5) für zu behandelnde Lösung zur Bildung eines einstufigen Behandlungssystems verbindet, wobei die Kreislauf-Schleifen der einzelnen Stufen zur Bildung einen mehrstufigen Behandlungssystems in Serie angeordnet sind, und wobei ein Einlaß zum Zuführen von Lösung und ein Auslaß zum Ablassen von Lösung aus der Umkehrosmose-Apparatur in den Kreislauf-Schleifen der ersten Stufe bzw. der letzten Stufe ausgebildet sind,
dadurch gekennzeichnet, daß der aufgebrachte, durchschnittliche Arbeitsdruck unter und nahe einem Grenzdruck liegt, bei dem die Durchtrittsströmung der Lösung pro Zeiteinheit konstant bleibt, und daß die durchschnittlichen Arbeitsdrücke in den einzelnen Stufen mit zunehmender Stufenzahl nacheinander erhöht werden.

2. Verfahren zur Anwendung von umgekehrter Osmose nach Anspruch 1,
bei dem die eingestellten, durchschnittlichen Arbeitsdrücke in den einzelnen Modulen mittels Druckerhöhungspumpen erhöht werden, die in und/oder zwischen den Kreislauf-Schleifen der einzelnen Module angeordnet sind.

3. Verfahren zur Anwendung von umgekehrter Osmose zwecks Konzentrierung einer Nahrungsmittel-Lösung in mehreren Modulen einer Umkehrosmose-Apparatur mit osmotischen Membranen durch Beaufschlagung der Lösung in den Modulen mit Arbeitsdruck,
bei dem jedes Modul (1, 2, 3) eine Kreislauf-Schleife (21, 22, 23) hat, die ein Einlaßventil (4) mit einem Auslaßventil (5) für zu behandelnde Lösung zur Bildung eines einstufigen Behandlungssystems verbindet, wobei die Kreislauf-Schleifen der einzelnen Stufen zur Bildung eines mehrstufigen Behandlungssystems in Serie angeordnet sind, und wobei ein Einlaß zum Zuführen von Lösung und ein Auslaß zum Ablassen von Lösung aus der Umkehrosmose-Apparatur in den Kreislauf-Schleifen der ersten Stufe bzw. der letzten Stufe ausgebildet sind,
und bei dem die durchschnittlichen Arbeitsdrücke in den einzelnen Stufen im wesentlichen gleich gehalten werden,
dadurch gekennzeichnet, daß der aufgebrachte, durchschnittliche Arbeitsdruck unter und nahe einem Grenzdruck liegt, bei dem die Durchtrittsströmung der Lösung pro Zeiteinheit konstant bleibt, und daß die Dichtheit der Porösität der Umkehrosmose-Membranen mit zunehmender Stufenzahl nacheinander verringert wird.

4. Verfahren zur Anwendung von umgekehrter Osmose zwecks Konzentrierung einer Nahrungsmittel-Lösung in mehreren Modulen einer Umkehrosmose-Apparatur mit osmotischen Membranen durch Beaufschlagung der Lösung in den Modulen mit Arbeitsdruck,
bei dem jedes Modul (1, 2, 3) eine Kreislauf-Schleife (21, 22, 23) hat, die ein Einlaßventil (4) mit einem Auslaßventil (5) für zu behandelnde Lösung zur Bildung eines einstufigen Behandlungssystems verbindet, wobei die Kreislauf-Schleifen der einzelnen Stufen zur Bildung eines mehrstufigen Behandlungssystems in Serie angeordnet sind, und wobei ein Einlaß zum Zuführen von Lösung und ein Auslaß zum Ablassen von Lösung aus der Umkehrosmose-Apparatur in den Kreislauf-Schleifen der ersten Stufe bzw. der letzten Stufe ausgebildet sind,
dadurch gekennzeichnet, daß der aufgebrachte, durchschnittliche Arbeitsdruck unter und nahe einem Grenzdruck liegt, bei dem die Durchtrittsströmung der Lösung pro Zeiteinheit konstant bleibt, die

**EP 0 210 837 B1**

durchschnittlichen Arbeitsdrücke in den einzelnen Stufen mit zunehmender Stufenzahl nacheinander erhöht werden, und die Dichtheit der Porösität der Umkehrosmose-Membranen mit zunehmender Stufenzahl nacheinander verringert wird.

5.  Verfahren zur Anwendung von umgekehrter Osmose nach einem der Ansprüche 1 bis 4, bei dem die zu behandelnde Lösung aus der Gruppe ausgewählt wird, die aus Milch, Magermilch, Käsemolke, Sojabohnenmilch und Fruchtsäften besteht.

6.  Verfahren zur Anwendung von umgekehrter Osmose nach einem der Ansprüche 1 bis 4, bei dem die zu behandelnde Lösung aus der Gruppe ausgewählt wird, die aus ultrafiltrierter Milch, ultrafiltrierter Magermilch, ultrafiltrierter Käsemolke, ultrafiltrierter Sojabohnenmilch und ultrafiltrierten Fruchtsäften besteht.

**Revendications**

1.  Procédé de traitement par osmose inverse pour concentrer une solution alimentaire dans plusieurs modules d'un appareil d'osmose inverse comprenant des membranes osmotiques, qui consiste à exercer une pression de fonctionnement sur ladite solution dans lesdits modules, dans lequel chaque module (1, 2, 3) possède une boucle de circulation (21, 22, 23) reliant entre eux un orifice de charge (4) et un orifice d'évacuation (5) pour la solution à traiter, afin de former un système de traitement en un seul stade, lesdites boucles de circulation des stades individuels étant reliées en série de manière à former un système de traitement multistade, ainsi qu'une entrée pour la charge de solution et une sortie pour la décharge de la solution dudit appareil d'osmose inverse, formée dans les boucles de circulation du premier stade et du dernier stade respectivement, caractérisé en ce que la pression moyenne de fonctionnement établie se situe juste au-dessous d'une pression limite à laquelle le perméat de la solution reste constant en fonction du temps, et les pressions moyennes de fonctionnement dans les stades individuels augmentent au fur et à mesure de l'accroissement du nombre de stades.

2.  Procédé de traitement par osmose inverse selon la revendication 1, dans lequel les pressions moyennes de fonctionnement, ajustées dans les différents modules, augmentent sous l'effet de pompes de surpression installées dans et/ou entre les boucles de circulation des modules individuels.

3.  Procédé de traitement par osmose inverse pour concentrer une solution alimentaire dans plusieurs modules d'un appareil d'osmose inverse comprenant des membranes osmotiques, qui consiste à exercer une pression de fonctionnement sur ladite solution dans lesdits modules, dans lequel chaque module (1, 2, 3) possède une boucle de circulation (21, 22, 23) reliant entre eux un orifice de charge (4) et un orifice d'évacuation (5) pour la solution à traiter, afin de former un système de traitement en un seul stade, lesdites boucles de circulation des stades individuels étant reliées en série de manière à former un système de traitement multistade, ainsi qu'une entrée pour la charge de solution et une sortie pour la décharge de la solution dudit appareil d'osmose inverse, formée dans les boucles de circulation du premier stade et du dernier stade respectivement, et dans lequel les pressions moyennes de fonctionnement dans les stades individuels sont maintenues de manière à être pratiquement identiques, caractérisé en ce que la pression moyenne de fonctionnement établie se situe juste au-dessous d'une pression limite à laquelle le perméat de la solution reste constant en fonction du temps, et la compacité des pores desdites membranes d'osmose inverse décroît au fur et à mesure que le nombre de stades croît.

4.  Procédé de traitement par osmose inverse pour concentrer une solution alimentaire dans plusieurs modules d'un appareil d'osmose inverse comprenant des membranes osmotiques, qui consiste à exercer une pression de fonctionnement sur ladite solution dans lesdits modules, dans lequel chaque module (1, 2, 3) possède une boucle de circulation (21, 22, 23) reliant entre eux un orifice de charge (4) et un orifice d'évacuation (5) pour la solution à traiter, afin de former un système de traitement en un seul stade, lesdites boucles de circulation des stades individuels étant reliées en série de manière à former un système de traitement multistade, ainsi qu'une entrée pour la charge de solution et une sortie pour la décharge de la solution dudit appareil d'osmose inverse, formée dans les boucles de circulation du premier stade et du dernier stade respectivement,

15

caractérisé en ce que la pression moyenne de fonctionnement établie se situe juste au-dessous d'une pression limite à laquelle le perméat de la solution reste constant en fonction du temps, les pressions moyennes de fonctionnement dans les stades individuels augmentent au fur et à mesure de l'accroissement du nombre de stades, et la compacité des pores desdites membranes d'osmose inverse décroît au fur et à mesure que le nombre de stades croît.

5. Procédé de traitement par osmose inverse selon une quelconque des revendications 1 à 4, dans lequel la solution à traiter est choisie dans le groupe formé par le lait, le lait écrémé, le petit-lait, le lait de soja et les jus de fruit.

6. Procédé de traitement par osmose inverse selon une quelconque des revendications 1 à 4, dans lequel la solution à traiter est choisie dans le groupe formé par le lait ultrafiltré, le lait écrémé ultrafiltré, le petit-lait ultrafiltré, le lait de soja ultrafiltré et les jus de fruit ultrafiltrés.

# Fig.1

(a)

(b)

POSITION

# Fig.2

# Fig.3

## Fig.4

OPERATING PRESSURE (MPa)

## Fig.5

OPERATING PRESSURE (MPa)

# Fig.6

(a)

PRESSURE (MPa)

(b)

POSITION

20

# Fig.7

(a)

(b)

PRESSURE (MPa)

POSITION